# EUROPEAN PATENT APPLICATION

(11) **EP 4 372 654 A1**
(43) Date of publication of application: **22.05.2024**
(21) Application number: 23211111.2
(22) Date of filing: 21.11.2023
(51) Int. Cl.: G06Q 20/32, G06Q 20/38

(54) **SETTLEMENT SERVER, SETTLEMENT METHOD, AND PROGRAM**

(30) Priority: 21.11.2022 JP 2022185475
(71) Applicant: Rakuten Group, Inc., Setagaya-ku Tokyo 158-0094 (JP)
(72) Inventor: PAULO, Fernando de Araujo, Tokyo, 1080075 (JP); CAYZAC, Julien Johann Cherubin, Tokyo, 1080075 (JP); SUZUKAKE, Wataru, Tokyo, 1080075 (JP)
(74) Representative: EIP

(57) **Abstract**

To improve the security during code settlement, a settlement server includes: a transmission unit that transmits key information to a user terminal used by a user; a reception unit that receives from a shop terminal a settlement request containing authentication information generated based on the key information and predetermined time information, and a user identifier of the user; a generation unit that generates a plurality of pieces of authentication information based on the key information and a plurality of different pieces of time information; and a settlement processing unit that performs settlement processing for the user using a verification result of the plurality of pieces of authentication information and authentication information received from the shop terminal.

## Description

### Field

The present invention relates to a settlement server, a settlement method, and a program.

### Background

Code settlement is widely used, in which a code is displayed on a user terminal and the code is read by a shop terminal for settlement.

JP 2020-204882 A describes a technique that enables code settlement even when a terminal is offline due to communication conditions or other factors.

### Summary

In the technique described in JP 2020-204882 A, however, the shop POS system acquires the settlement number and time stamp information from a code image displayed on the terminal and transmits them to the settlement server. Therefore, there is a risk that the shop POS system will know the settlement number and time stamp information.

The present invention therefore aims to provide a technique capable of improving the security during code settlement.

A settlement server according to one aspect of the present invention includes: a transmission unit that transmits key information to a user terminal used by a user; a reception unit that receives from a shop terminal a settlement request containing authentication information generated based on the key information and predetermined time information, and a user identifier of the user; a generation unit that generates a plurality of pieces of authentication information based on the key information and a plurality of different pieces of time information; and a settlement processing unit that performs settlement processing for the user using a verification result of the plurality of pieces of authentication information and authentication information received from the shop terminal.

The present invention provides a technique capable of improving the security during code settlement.

### Brief Description of Drawings

Fig. 1 illustrates one example of a settlement system according to the present embodiment.
Fig. 2 illustrates an example hardware configuration of the settlement server, the shop terminal, and the user terminal.
Fig. 3 illustrates an example of the functional block configuration of the settlement server.
Fig. 4 illustrates an example of the key management DB and the settlement DB.
Fig. 5 illustrates an example of the functional block configuration of the shop terminal.
Fig. 6 illustrates an example of the functional block configuration of the user terminal.
Fig. 7 is a sequence diagram illustrating an example of the processing procedure performed by the settlement system.
Fig. 8 illustrates a format example of a character string embedded in a code image.
Fig. 9 is a flowchart illustrating an example of the settlement processing by the settlement server.

### Description of Embodiment

The following describes one embodiment of the present invention, with reference to the attached drawings. In the attached drawings, like numbers indicate like components.

### <System configuration>

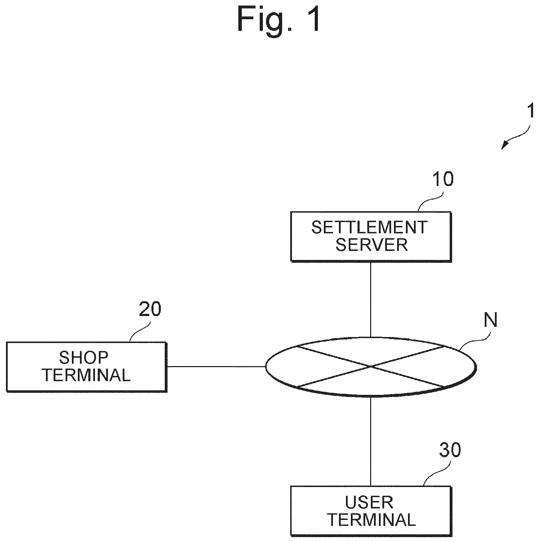

Fig. 1 illustrates one example of a settlement system according to the present embodiment. In the settlement system 1, a settlement server 10, a shop terminal 20, and a user terminal 30 are connected via a wireless or wired communication network N. The number of shop terminal 20 and user terminal 30 is not limited to one, and may be multiple.

The settlement server 10 provides settlement services to a user. The settlement server 10 may include one or more physical servers, may include a virtual server, or may include a cloud server.

The shop terminal 20 is used by a store clerk, for example, at a shop. The shop terminal 20 may be a point of sales (POS) terminal, a tablet terminal, a smartphone, or the like. The shop terminal 20 is equipped with a code reader or camera, and reads a code image displayed on the screen of the user terminal 30. A settlement application for shop terminal may be installed in the shop terminal 20, so that the execution of the settlement application on the shop terminal 20 implements a settlement function according to the present embodiment on the shop terminal 20.

The user terminal 30 is used by a user who pays at a shop, and includes a smart phone, a tablet terminal, a mobile phone, or a wearable device. A settlement application for user terminal may be installed in the user terminal 30, so that the execution of the settlement application on the user terminal 30 implements a settlement function according to the present embodiment on the user terminal 30.

In the present embodiment, "online" and "online state" mean a state, in which the user terminal 30 is communicable with the settlement server 10 via the communication network N, and "offline" and "offline state" mean a state, in which the user terminal 30 is not communicable with the settlement server 10 for some reason.

For settlement at a shop, a user operates the user terminal 30 to activate the settlement application. If the user terminal 30 is online, the user terminal 30 requests information for generating a code image (which may be simply referred to as a "code") from the settlement server 10, and transmits a code image generated from the information, which is obtained from the settlement server 10, and displays it on the screen of the user terminal 30. The shop terminal 20 reads this code image with the code reader or camera that the shop terminal 20 has. Then, the shop terminal 20 transmits the information embedded in the code image, the settlement amount, and the shop ID (identifier) to the settlement server 10. The settlement server 10 uses the information received from the shop terminal 20 to specify the user who is the settlement target, and performs settlement processing by subtracting the value corresponding to the settlement amount from the value that the user possesses.

The shop ID is an identifier that uniquely identifies a shop subscribing to the settlement service provided by the settlement server 10. The "value" may be the currency itself, or it may be a value equivalent to the currency, such as points. The "code image" may be a one-dimensional code (e.g., barcode), a two-dimensional code (e.g., QR code (registered trademark)), or a three-dimensional code. A barcode, which has a small amount of data that can be stored, reduces the processing load. Generating a code image from information may also be referred to as encoding the code image. Reading information from a code image may also be referred to as decoding the code image.

If the user terminal 30 is offline, the user terminal 30 is not able to communicate with the settlement server 10, and thus is not able to obtain information for generating a code image from the settlement server 10. Then, the present embodiment is configured to store identical key information, which may be referred to as SEED, in the user terminal 30 and settlement server 10. If the user terminal 30 is offline, the user terminal 30 generates "authentication information" based on the key information and time information, and displays a code image with the authentication information and user ID incorporated therein on the screen of the user terminal 30. The user ID is an identifier that uniquely identifies a user who uses the settlement service provided by the settlement server 10.

The "authentication information" may be information generated by inputting the key information and time information into a predetermined function (algorithm). This function is commonly used when the settlement server 10 and the user terminal 30 generate authentication information. The "authentication information" may be referred to as a one-time password, predetermined information, or the like. The "time information" may be referred to as a time stamp or the like.

The shop terminal 20 reads this code image with the code reader or camera that the shop terminal 20 has, thus obtaining the information embedded in the code image, and transmits a settlement request containing the obtained information, settlement amount, and shop ID to the settlement server 10. The information embedded in the code image contains the authentication information and user ID. The settlement server 10 generates one or more pieces of authentication information using the key information corresponding to the user ID and the reception time of the settlement request. The settlement server 10 determines whether or not the settlement request is legitimate based on whether or not the one or more pieces of authentication information generated matches the authentication information contained in the information received from the shop terminal 20. If the settlement server 10 determines that the settlement request is legitimate, it performs settlement processing by subtracting the settlement amount from the money that the user possesses. This enables settlement processing even when the user terminal 30 is offline.

### <Hardware configuration>

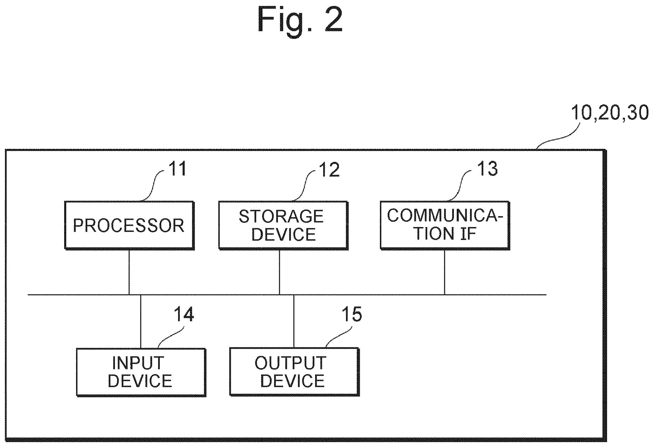

Fig. 2 illustrates an example hardware configuration of the settlement server 10, the shop terminal 20, and the user terminal 30. The settlement server 10, the shop terminal 20, and the user terminal 30 each include a processor 11 such as a central processing unit (CPU) or a graphical processing unit (GPU), a storage device 12 such as a memory, a hard disk drive (HDD) and/or a solid state drive (SSD), a communication interface (IF) 13 for wired or wireless communications, an input device 14 for receiving input operations, and an output device 15 for outputting information. The input device 14 includes a keyboard, a touch panel, a mouse, and/or a microphone. The output device 15 includes a display, a touch panel, and/or a speaker. The settlement server 10, shop terminal 20 and user terminal 30 may be referred to as computers.

### <Functional block configuration>

### (Settlement server)

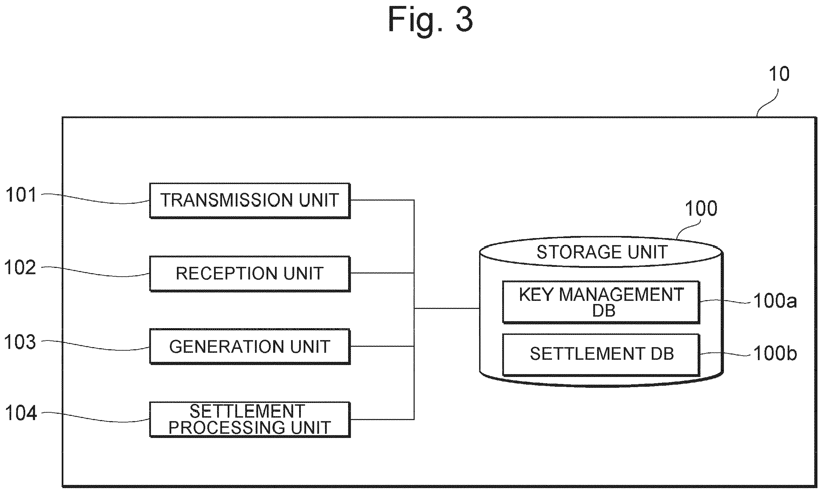

Fig. 3 illustrates an example of the functional block configuration of the settlement server 10. The settlement server 10 includes a storage unit 100, a transmission unit 101, a reception unit 102, a generation unit 103, and a settlement processing unit 104. The storage unit 100 can be implemented using the storage device 12 of the settlement server 10. The transmission unit 101, reception unit 102, generation unit 103, and settlement processing unit 104 can be implemented by the processor 11 of the settlement server 10 executing a program stored in the storage device 12. This program can be stored in a storage medium. The storage medium storing this program may be a non-transitory computer readable medium. The non-transitory medium is not limited particularly, which may include a USB memory and a CD-ROM.

The storage unit 100 stores a key management data base (DB) 100a that stores key information, and a settlement DB 100b that stores various information used for settlement processing.

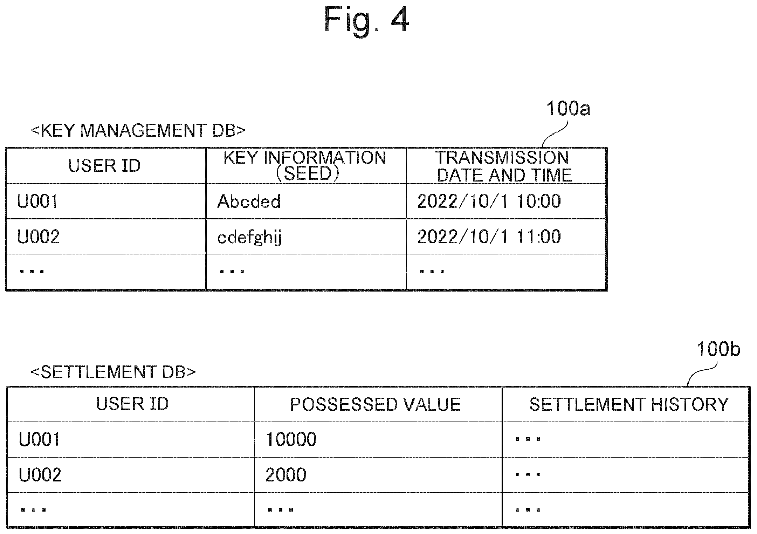

Fig. 4 illustrates an example of the key management DB 100a and the settlement DB 100b. The key management DB 100a associates and manages user IDs, key information, and the date and time when the key information is transmitted to the user terminal 30. The settlement DB 100b associates and manages user IDs, values possessed by the users (possessed values), and the history of settlements made by the users (settlement history). For instance, the settlement history stores the date and time when the users make a settlement, the settlement amount, the shop ID of the shop where the user makes the settlement.

The transmission unit 101 transmits various types of information to the shop terminal 20 and the user terminal 30. For instance, the transmission unit 101 transmits key information to the user terminal 30 used by the user. The transmission unit 101 may be configured to, after the settlement processing is performed by the settlement processing unit 104, transmit a result of the settlement processing (e.g., settlement completion or settlement error) to the shop terminal 20. The transmission unit 101 may be configured to, after the settlement processing is performed by the settlement processing unit 104 and in response to the detection of online state of the user terminal 30, transmit a result of the settlement processing to the user terminal 30.

The reception unit 102 receives various types of information from the shop terminal 20 and the user terminal 30. For instance, the reception unit 102 receives a settlement request containing authentication information generated based on key information and predetermined time information and a user ID (user identifier) of the user.

The reception unit 102 may be configured to receive a settlement request from the shop terminal 20, where the settlement request contains a multi-digit character string indicating authentication information and a user ID, the multi-digit character string being obtained by the shop terminal 20 from the user terminal 30 in an offline state. The multi-digit character string contained in the settlement request may be just the character string that is read by the shop terminal 20 from the code image (e.g., bar code) displayed on the screen of the user terminal 30. That is, the settlement request may contain just the multi-digit character string indicating the authentication information and user ID embedded in the code image and read from the code image by the shop terminal 20.

The code image may have identification information embedded therein, indicating that the user terminal 30 is in offline state. The identification information may be information separate from the authentication information and the user ID. That is, the reception unit 102 may be configured to receive from the shop terminal 20 a settlement request containing a multi-digit character string indicating the authentication information, the user ID, and the identification information. Alternatively, the settlement request containing a multi-digit character string that indicates authentication information and user ID may imply that the user terminal 30 is in offline state. In this case, the settlement server 10 may determine that the user terminal 30 is in offline state when the settlement request includes a multi-digit character string indicating the authentication information and the user ID. This allows the settlement server 10 to determine whether the user terminal 30 is offline or online.

In this embodiment, key information is managed in association with users. Thus, the user terminal 30, when it is in offline state, may be configured to use the same key information to generate authentication information, regardless of at which shop the settlement is made. That is, the reception unit 102 may receive from each of the plurality of shop terminals 20 a settlement request including authentication information generated based on key information and predetermined time information, and the user ID of the user. At this time, the authentication information that the reception unit 102 receives from each of the plurality of shop terminals 20 may be generated based on the same key information. Repeatedly generating authentication information from the same key information reduces the communication load between the settlement server 10 and the user terminal 30 compared to the method of updating the key information every time the authentication information is generated. A method of updating key information every time authentication information is generated fails to update the key information while the user terminal 30 is offline. This means that once the key information is used up, the user terminal 30 is not able to make a settlement until it becomes online again. The present embodiment is configured to repeatedly generate authentication information from the same key information, so that the user terminal 30 is able to repeatedly make settlement even when its offline state continues.

The generation unit 103 generates a plurality of pieces of authentication information based on key information and a plurality of different pieces of time information. Note that the time information may be time expressed in a predetermined unit of time. For instance, the predetermined unit of time may be seconds (e.g., 1 second or 10 seconds) or minutes (e.g., 1 minute or 2 minutes).

For the plurality of different pieces of time information, the generation unit 103 may calculate a predetermined number of consecutive pieces of past time information at predetermined time intervals from the reception time when the settlement request is received. The generation unit 103 may also generate a plurality of pieces of authentication information based on the time information corresponding to the reception time and the predetermined number of pieces of past time information. Any predetermined time interval may be used, which may be in seconds (e.g., 1 or 10 seconds) or in minutes (e.g., 1 or 2 minutes). For instance, assume that the predetermined time unit is 1 minute, the predetermined time interval is 1 minute, the predetermined number is 2, and the reception time when the settlement request is received at 10:10:30. In this case, the generation unit 103 may generate three pieces of authentication information corresponding to 10:10, 10:09, and 10:08.

The settlement processing unit 104 performs settlement processing for the user using the verification result of the plurality of pieces of authentication information generated by the generation unit 103 and the authentication information received from the shop terminal 20. Specifically, if the authentication information received from the shop terminal 20 is included in the plurality of pieces of authentication information generated by the generation unit 103, the settlement processing unit 104 may determine that the settlement request is legitimate and perform the settlement processing (proceed with the settlement process). If the authentication information received from the shop terminal 20 is not included in the plurality of pieces of authentication information generated by the generation unit 103, the settlement processing unit 104 may determine that the settlement request is an unauthorized settlement request or that some abnormality has occurred, and may not perform settlement processing (stop settlement).

If the settlement processing unit 104 determines that the settlement request is legitimate and the settlement amount is within the user's possession value, the settlement processing unit 104 may complete the settlement processing by subtracting the settlement amount from the user's possession value. If the settlement amount exceeds the upper-limit settlement amount, the settlement processing unit 104 may not perform settlement processing (stop settlement). The upper-limit settlement amount means the upper limit amount that can be paid in one settlement and/or within a predetermined period. This is determined for each user based on the status of the user terminal 30 (e.g., whether it is an offline or online settlement), the payment source settings (e.g., credit card payment, point payment, debit from a bank account) and/or the user's attributes (e.g., rank, status). For instance, when a user whose upper-limit settlement amount is set up to 10,000 yen per settlement and 100,000 yen per 24 hours tries to purchase a product for 20,000 yen, the settlement processing unit 104 does not process this settlement because it exceeds the upper-limit amount per settlement. The settlement processing unit 104 is configured not to perform settlement processing if the amount exceeds the user's upper-limit settlement amount in this way, which reduces the risk for any fraudulent use.

### (Shop terminal)

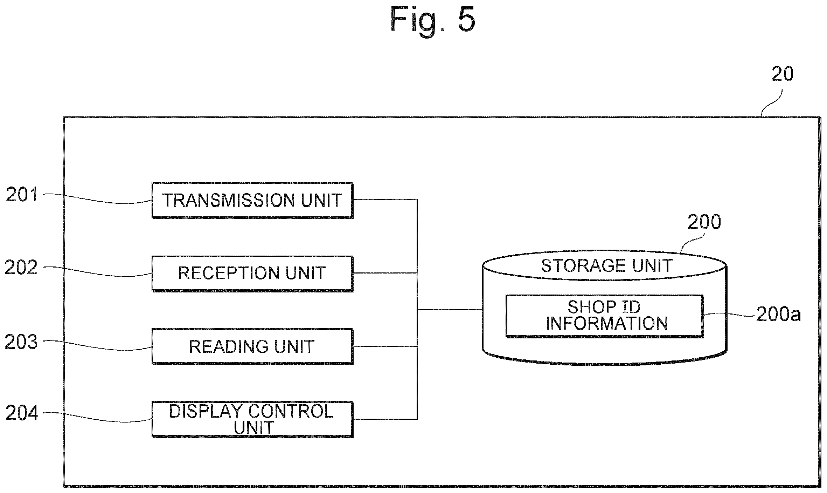

Fig. 5 illustrates an example of the functional block configuration of the shop terminal 20. The shop terminal 20 includes a storage unit 200, a transmission unit 201, a reception unit 202, a reading unit 203, and a display control unit 204. The storage unit 200 can be implemented using the storage device 12 of the shop terminal 20. The transmission unit 201, reception unit 202, reading unit 203, and display control unit 204 can be implemented by the processor 11 of the shop terminal 20 executing a program stored in the storage device 12. This program can be stored in a storage medium. The program may be the settlement application for shop terminal described above. The storage medium storing this program may be a non-transitory computer readable medium. The non-transitory medium is not limited particularly, which may include a USB memory and a CD-ROM.

The storage unit 200 stores shop ID information 200a. The shop ID information 200a stores a shop ID of the shop where the shop terminal 20 is installed.

The transmission unit 201 transmits various types of information to the settlement server 10. For instance, the transmission unit 201 sends a settlement request containing a multi-digit character string, which is obtained by reading a code image, to the settlement server 10.

The reception unit 202 receives various types of information from the settlement server 10. For instance, the reception unit 202 receives information indicating a result of settlement processing from the settlement server 10.

The reading unit 203 reads a code image displayed on the screen of the user terminal 30 using a code reader or camera of the shop terminal 20.

The display control unit 204 controls to display various types of information on the screen of the shop terminal 20. For instance, the display control unit 204 controls to display a result of settlement processing received from the settlement server 10 on the screen of the shop terminal 20.

### (User terminal)

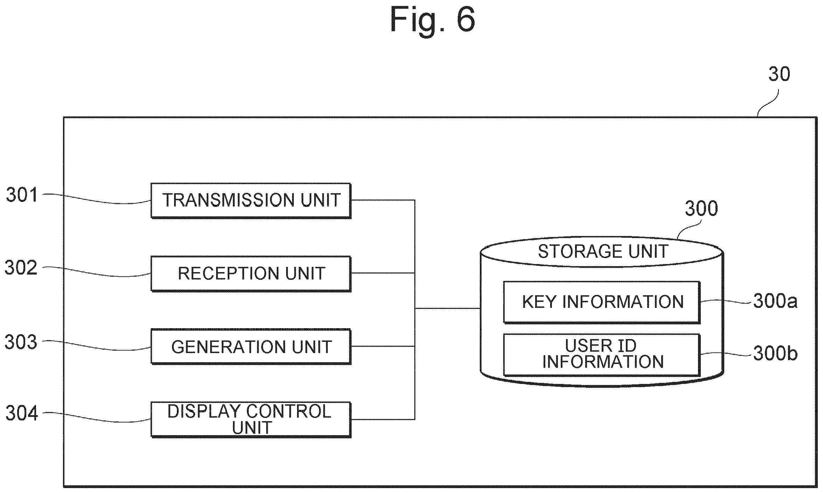

Fig. 6 illustrates an example of the functional block configuration of the user terminal 30. The user terminal 30 includes a storage unit 300, a transmission unit 301, a reception unit 302, a generation unit 303, and a display control unit 304. The storage unit 300 can be implemented using the storage device 12 of the user terminal 30. The transmission unit 301, reception unit 302, generation unit 303, and display control unit 304 can be implemented by the processor 11 of the user terminal 30 executing a program stored in the storage device 12. This program can be stored in a storage medium. The program may be the settlement application for user terminal described above. The storage medium storing this program may be a non-transitory computer readable medium. The non-transitory medium is not limited particularly, which may include a USB memory and a CD-ROM.

The storage unit 300 stores key information 300a and user ID information 300b. The key information 300a stores key information that the user uses. The user ID information 300b stores the user ID of the user.

The transmission unit 301 transmits various types of information to the settlement server 10. For instance, the transmission unit 301 may request the settlement server 10 to transmit (update) key information.

The reception unit 302 receives various types of information from the settlement server 10. For instance, the reception unit 302 receives key information from the settlement server 10.

The generation unit 303 generates authentication information based on key information and time information. Note that, similar to the settlement server 10, the time information may be time expressed in a predetermined unit of time. For instance, the predetermined unit of time may be seconds (e.g., 1 second or 10 seconds) or minutes (e.g., 1 minute or 2 minutes). The time information may be information corresponding to the current time. The predetermined time unit is set to be the same as the time unit used when the generation unit 103 of the settlement server 10 generates a plurality of pieces of authentication information. For instance, if the predetermined time unit is 1 minute and the current time is any time from 10:30:00 to 10:30:59, the time information used to generate the authentication information is "10:30".

If the user terminal 30 is offline, the display control unit 304 controls to display a code image with the authentication information and user ID embedded therein on the screen of the user terminal 30. The code image may contain identification information, which is explicitly or implicitly embedded, indicating that the user terminal 30 is offline.

### <Processing procedure>

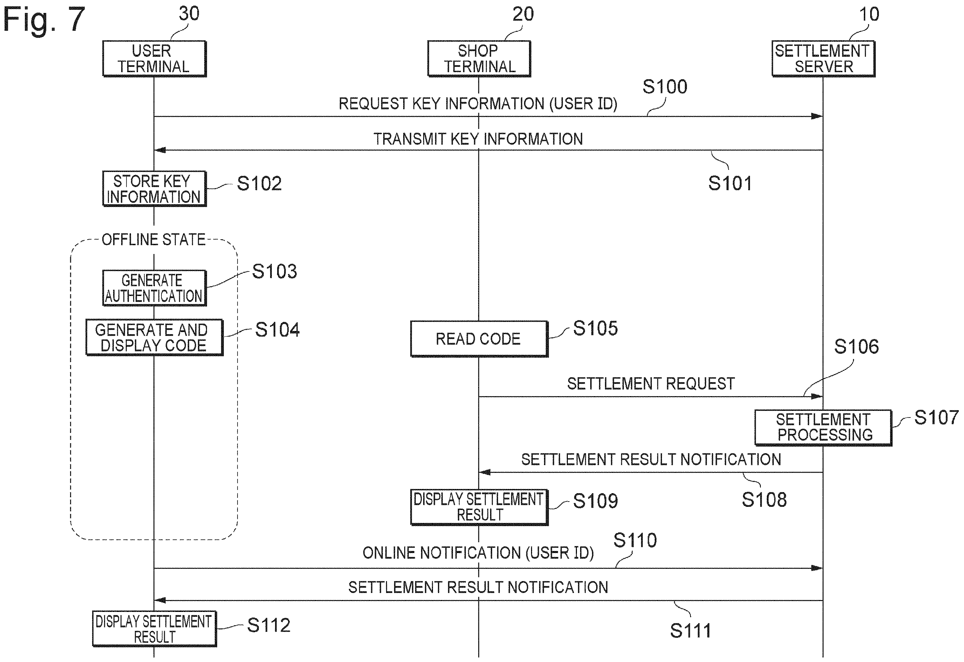

Fig. 7 is a sequence diagram illustrating an example of the processing procedure performed by the settlement system 1. Referring to Fig. 7, the following describes the procedure of the settlement processing when the user terminal 30 is offline. In the following description, step S103 and step S104 in the procedure performed by the user terminal 30 are to be executed when the user terminal 30 is in an offline state. Step S100, step S101, and step S110 to step S112 are to be executed when the user terminal 30 is in an online state.

In step S100, the transmission unit 301 of the user terminal 30 transmits a key information request to the settlement server 10, thus requesting key information. The key information request contains the user ID.

In step S101, the transmission unit 101 of the settlement server 10 acquires key information corresponding to the user ID from the key management DB 100a and transmits the acquired key information to the user terminal 30.

In step S102, the reception unit 302 of the user terminal 30 stores the received key information in the key information 300a.

In step S103, the generation unit 303 of the user terminal 30 generates authentication information based on the key information and time information. For instance, if the predetermined time unit is 1 minute and the current time is 10:10:30, then the generation unit 303 inputs the key information and time information (10:10) to a predetermined function (algorithm), thus generating authentication information. This function may include a hash function. That is, the authentication information is irreversible. Although it is possible to generate authentication information from key information and time information, it may be impossible to generate or estimate key information and time information from authentication information. Generating authentication information using a hash function reduces the data volume of authentication information, and allows code images, such as barcodes, to be used, which have a small amount of data that can be stored.

In step S104, the generation unit 303 generates a multi-digit character string to be embedded in the code image from the authentication information and the user ID, and generates a code image from the generated multi-digit character string. The display control unit 304 controls to display the code image generated by the generation unit 303 on the screen of the user terminal 30.

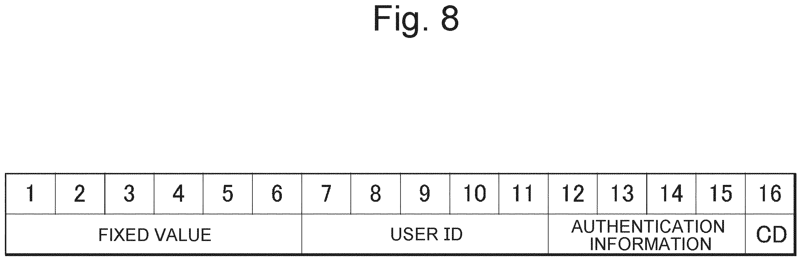

Fig. 8 illustrates a format example of a character string embedded in a code image. As illustrated in Fig. 8, the code image may store a 16-digit character string. This character string may be only numbers, a combination of numbers and letters, or a combination of numbers, symbols, and letters. As illustrated in Fig. 8, the first 6 digits of the 16 digits may be a fixed value, the next 5 digits may be the user ID, the next 4 digits may be the authentication information, and the last digit may be the check digit (CD). Instead of or as part of the fixed value, identification information indicating that the user terminal 30 is offline may be included. Referring back to Fig. 7, the following continues the description.

In step S105, the reading unit 203 of the shop terminal 20 reads the code image displayed on the screen of the user terminal 30 according to the operation of the store clerk, thereby obtaining the multi-digit character string (e.g., the 16-digit character string in Fig. 8) embedded in the code image.

In step S106, the transmission unit 201 of the shop terminal 20 sends a settlement request containing the multi-digit character string read by the reading unit 203 (e.g., the 16-digit character string in Fig. 8), the settlement amount, and the shop ID to the settlement server 10.

In this step, the shop terminal 20 may include the multi-digit character string read from the code image in the settlement request for transmission. That is, the shop terminal 20 may transmit the multi-digit character string embedded in the code image to the settlement server 10 without understanding the content of the character string. This reduces the processing load on the shop terminal 20, compared to the configuration where the shop terminal 20 inspects the read character string using a check digit, and if there are no errors, extracts authentication information and user ID from the multi-digit character string and transmits it to the settlement server 10.

In step S107, the settlement processing unit 104 of the settlement server 10 performs settlement processing based on the settlement request received from the shop terminal 20.

In step S108, the transmission unit 101 of the settlement server 10 transmits information indicating the settlement result to the shop terminal 20.

In step S109, the display control unit 204 of the shop terminal 20 controls to display a result of settlement received from the settlement server 10 on the screen of the shop terminal 20.

In step S110, the transmission unit 301 of the user terminal 30 sends an online notification to the settlement server 10 when it detects that the state has changed from offline to online. This online notification contains the user ID.

In step S111, the transmission unit 101 of the settlement server 10 transmits unsent settlement results to the user terminal 30 when it determines that the user terminal 30 is now online.

In step S112, the display control unit 304 of the user terminal 30 controls to display a result of settlements received from the settlement server 10 on the screen. This allows the user to check the result of settlements made while offline on the screen of the user terminal 30.

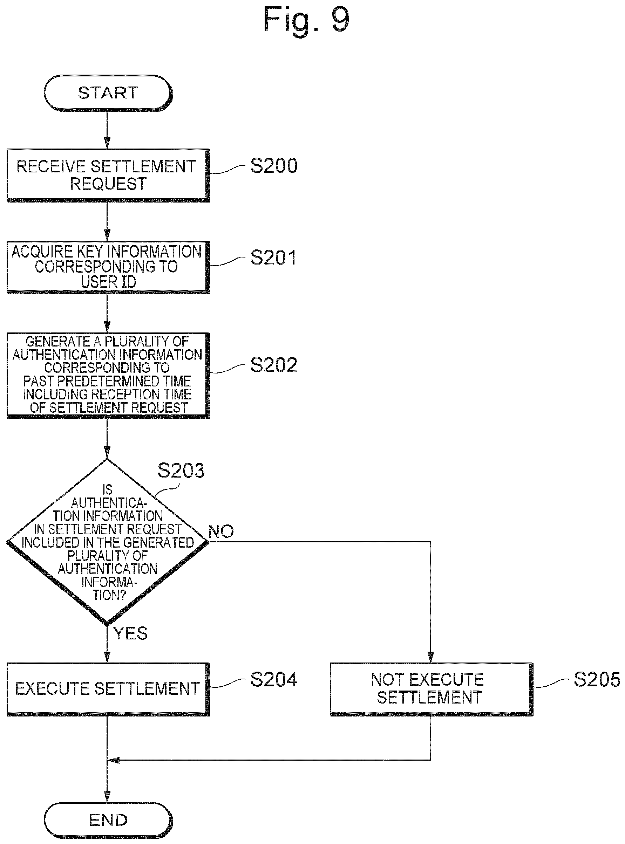

Fig. 9 is a flowchart illustrating an example of the settlement processing by the settlement server 10. Referring to Fig. 9, the following specifically describes the procedure of step S107 in Fig. 7.

In step S200, the reception unit 102 receives a settlement request from a shop terminal 20.

In step S201, the generation unit 103 acquires a user ID from a multi-digit character string included in the settlement request. The generation unit 103 also obtains the key information corresponding to the acquired user ID from the key management DB 100a.

In step S202, the generation unit 103 generates a plurality of pieces of authentication information corresponding to past predetermined time including the reception time of the settlement request. Specifically, the generation unit 103 calculates a predetermined number of pieces of past time information at predetermined time intervals from the reception time of the settlement request, and inputs the time information corresponding to the reception time and the predetermined number of pieces of past time information into a predetermined function (algorithm), thus generating a plurality of pieces of authentication information. Note that similar to the description on the settlement server 10, this function may include a hash function. That is, the plurality of pieces of authentication information is irreversible. Although it is possible to generate a plurality of pieces of authentication information from key information and time information, it may be impossible to generate or estimate key information and time information from each of a plurality of pieces of authentication information.

For instance, assume the case where the predetermined time unit is 1 minute, the predetermined time interval is 1 minute, the predetermined number is 2, and the reception time when the settlement request is received is at 10:10:30. In this case, the generation unit 103 generates three pieces of authentication information corresponding to 10:10, 10:09, and 10:08. In another example, assume the case where the predetermined time unit is 1 second, the predetermined time interval is 1 second, the predetermined number is 20, and the reception time when the settlement request is received is 10:10:50. In this case, the generation unit 103 generates 20 pieces of authentication information corresponding to 10:10:50, 10:10:49, 10:10:48, 10:10:47, 10:10:46, ... 10:10:31.

In step S203, the settlement processing unit 104 obtains authentication information from the multi-digit character string included in the settlement request and determines whether the authentication information obtained from the settlement request is included in the plurality of pieces of authentication information generated in the procedure of step S202. If it is included, the process proceeds to step S204, and if not included, the process proceeds to step S205.

For instance, assume that the predetermined time unit is 1 minute, the predetermined time interval is 1 minute, and the predetermined number is 2. Also assume that the time when the user terminal 30 generates the authentication information and displays the code image is 10:10:30, and the time when the settlement server 10 receives the settlement request is 10:11:20. In this case, the authentication information included in the settlement request is the authentication information corresponding to 10:10, and the plurality of pieces of authentication information generated by the settlement server 10 includes three pieces of authentication information corresponding to 10:11, 10:10, and 10:09. That is, the authentication information included in the settlement request is included in the three pieces of authentication information, and thus settlement server 10 proceeds to step S204.

Assume another case where while the time when the user terminal 30 generates authentication information and displays a code image is 10:10:30, the time when the settlement server 10 receives the settlement request is 10:20:20. In this case, the authentication information included in the settlement request is the authentication information corresponding to 10:10, and the plurality of pieces of authentication information generated by the settlement server 10 includes three pieces of authentication information corresponding to 10:20, 10:19, and 10:18. That is, the authentication information included in the settlement request is not included in the three pieces of authentication information, so that the settlement server 10 proceeds to step S205.

In step S204, the settlement processing unit 104 executes a settlement. Specifically, if the settlement amount included in the settlement request can be subtracted from the user's possession value, the settlement processing unit 104 subtracts the value corresponding to the settlement amount from the user's predetermined value and notifies the shop terminal 20 of the completion of the settlement. If the settlement amount included in the settlement request cannot be subtracted from the user's possession value, the transmission unit 101 notifies the shop terminal 20 of the settlement error.

In step S205, the settlement processing unit 104 terminates the process without executing settlement. At this time, the transmission unit 101 may notify the shop terminal 20 of the settlement error.

### <Summary>

According to the embodiment described above, the settlement server 10 receives, from a shop terminal 20 that reads a code image displayed on the user terminal 30, a settlement request including authentication information and a user identifier embedded in the code image. The settlement server 10 performs the settlement processing for the user using the verification result of the authentication information received from the shop terminal 20 with a plurality of pieces of authentication information generated based on a plurality of different pieces of time information including the reception time of the settlement request. This allows settlement processing to be performed without letting the shop terminal 20 know the content of the authentication information, such as the time information used to generate the authentication information, thereby enhancing security during code settlement.

In this embodiment, determination is made whether the settlement processing is legitimate or not by comparing the authentication information received from the shop terminal 20 with a plurality of pieces of authentication information generated by the settlement server 10 that corresponds to a predetermined period in the past, including the reception time of the settlement request. This reduces the risk of unauthorized settlement using code images that have leaked in the past.

### <Modified Examples>

The embodiment described above is intended to facilitate the understanding of the present invention and is not intended to limit the present invention. The flowcharts, sequences, and each element in the above embodiment and their arrangement, materials, conditions, shapes, dimensions, etc. are not limited to those described above and may be modified as appropriate. The configuration of one embodiment may be partially replaced with the corresponding configuration in another embodiment, or they may be combined.

For instance, the procedure of step S101 in Fig. 7 may be repeatedly executed at predetermined intervals. That is, the key information stored in the user terminal 30 may be updated at predetermined intervals.

The settlement processing unit 104 of the settlement server 10 may change the upper-limit settlement amount based on the elapsed time from the date and time when the key information is sent to the user terminal 30 to the date and time the settlement request is received. For instance, the longer the time between when the key information is sent to the user terminal 30 and when the settlement request is received from the shop terminal 20, the lower the upper-limit settlement amount for the user may be set by the settlement processing unit 104. Conceivably, the longer the elapsed time since the key information was transmitted to the user terminal 30, the higher the risk of the key information is leaked. Therefore, the longer the time elapsed since the key information is transmitted, the lower the upper-limit settlement amount, thereby reducing the risk for unauthorized use due to leakage of the key information.

The settlement processing unit 104 may compare the plurality of pieces of authentication information generated by the generation unit 103 and the authentication information included in a settlement request received from the shop terminal 20. The settlement processing unit 104 may lower the upper-limit settlement amount for the user for older time information that is used to generate the authentication information that matches the authentication information received from the shop terminal 20, out of the plurality of pieces of authentication information. Conceivably, the longer the elapsed time since the code image was displayed on the screen of the user terminal 30, the higher the risk of the code image is known to others. Therefore, the longer the time elapsed since the authentication information is generated at the user terminal 30, the lower the upper-limit settlement amount, thereby reducing the risk for unauthorized use due to leakage of the code image.

The settlement processing unit 104 may change the upper-limit settlement amount for user based on the fraud risk degree of the settlement request received from the shop terminal 20. For instance, the settlement processing unit 104 may evaluate the degree of fraud risk based on the date and time the settlement request is received from the shop terminal 20 and the location information of the shop terminal 20, from which the settlement request is received. The location information of the shop terminal 20 may be stored in the storage unit 100 in association with the shop ID. Specifically, the settlement processing unit 104 may compare the date and time when the settlement request is received, and location of the shop, from which the current settlement request is received, with the date and time when the settlement request is received, and location of the shop, from which the previous settlement request is received. The settlement processing unit 104 may also evaluate the fraud risk degree to be high when the same user is determined to be making unnatural movements (e.g., settling in Tokyo five minutes after settling in Hokkaido). This reduces the risk of suspected unauthorized use.

In this embodiment, the generation unit 103 of the settlement server 10 generates a plurality of pieces of authentication information based on the key information and a plurality of different pieces of time information. In this case, the generation unit 103 may further calculate a predetermined number of pieces of consecutive future time information at predetermined time intervals from the time of receipt of the settlement request as the plurality of difference pieces of different time information. The generation unit 103 may also generate a plurality of pieces of authentication information based on the time information corresponding to the reception time of settlement request, the predetermined number of pieces of past time information, and the predetermined number of pieces of future time information.

For instance, as described in the procedure in step S202 of Fig. 9, assume the case where the predetermined time unit is 1 minute, the predetermined time interval is 1 minute, the predetermined number is 2, and the reception time when the settlement request is received is at 10:10:30. In this case, the generation unit 103 may generate three pieces of authentication information corresponding to 10:10, 10:09, and 10:08, and also may generate authentication information corresponding to 10:11, and 10:12. The settlement processing unit 104 may determine whether the authentication information obtained from the settlement request is included in the generated plurality of pieces of authentication information. This allows settlement processing to be performed even if the clock of the user terminal 30 is ahead of the current time, for example, thereby improving user convenience.

### <Addenda>

The present embodiment may be expressed as follows.
[Addendum 1]
   A settlement server including: a transmission unit that transmits key information to a user terminal used by a user;
   a reception unit that receives from a shop terminal a settlement request containing authentication information generated based on the key information and predetermined time information, and a user identifier of the user;
   a generation unit that generates a plurality of pieces of authentication information based on the key information and a plurality of different pieces of time information; and
   a settlement processing unit that performs settlement processing for the user using a verification result of the plurality of pieces of authentication information and authentication information received from the shop terminal.
[Addendum 2]
   The settlement server according to addendum 1, wherein the reception unit receives, from the shop terminal, the settlement request containing a multi-digit character string indicating the authentication information and the user identifier, the multi-digit character string being received by the shop terminal from the user terminal in an offline state.
[Addendum 3]
   The settlement server according to addendum 1 or 2, wherein, after the settlement processing is performed, the transmission unit transmits a result of the settlement processing to the user terminal in response to detection of an online state of the user terminal.
[Addendum 4]
   The settlement server according to any one of addenda 1 to 3, wherein the reception unit receives, from each of a plurality of shop terminals, a settlement request containing authentication information generated based on the key information and predetermined time information, and a user identifier of the user, and
   the authentication information that the reception unit receives from each of the plurality of shop terminals is generated based on the same key information.
[Addendum 5]
   The settlement server according to any one of addenda 1 to 4, wherein the reception unit receives, from the shop terminal, the settlement request containing a multi-digit character string indicating the authentication information and the user identifier, and
   the multi-digit character string is read from a barcode displayed on a screen of the user terminal at the shop terminal.
[Addendum 6]
   The settlement server according to addendum 5, wherein the barcode has identification information embedded therein, the identification information indicating that the user terminal is in an offline state, and
   the reception unit receives, from the shop terminal, the settlement request containing the multi-digit character string indicating the authentication information, the user identifier, and the identification information.
[Addendum 7]
   The settlement server according to any one of addenda 1 to 6, wherein the settlement request includes a settlement amount, and
   when the settlement amount exceeds an upper-limit settlement amount for the user, the settlement processing unit does not perform the settlement processing.
[Addendum 8]
   The settlement server according to any one of addenda 1 to 7, wherein the settlement request includes a settlement amount, and
   the longer the time between when the key information is sent to the user terminal and when the settlement request is received, the lower the settlement upper-limit amount for the user set by the settlement processing unit.
[Addendum 9]
   The settlement server according to any one of addenda 1 to 8, wherein the settlement processing unit changes the upper-limit settlement amount for the user based on a fraud risk degree of the settlement request received from the shop terminal.
[Addendum 10]
   The settlement server according to addendum 9, wherein the settlement processing unit evaluates the fraud risk degree based on the date and time when the settlement request is received from the shop terminal and location information of the shop terminal.
[Addendum 11]
   The settlement server according to any one of addenda 1 to 10, wherein the generation unit calculates the plurality of different pieces of time information that are a predetermined number of pieces of past time information at predetermined time intervals from reception time of the settlement request, and generates the plurality of pieces of authentication information based on time information corresponding to the reception time and the predetermined number of pieces of past time information.
[Addendum 12]
   The settlement server according to addendum 11, wherein the generation unit further calculates the plurality of different pieces of time information that are a predetermined number of pieces of future time information at predetermined time intervals from the reception time, and generates the plurality of pieces of authentication information based on time information corresponding to the reception time, the predetermined number of pieces of past time information, and the predetermined number of pieces of future time information.
[Addendum 13]
   The settlement server according to any one of addenda 1 to 12, wherein when authentication information received from the shop terminal is included in the plurality of pieces of authentication information, the settlement processing unit performs the settlement processing.
[Addendum 14]
   The settlement server according to any one of addenda 1 to 13, wherein the authentication information has irreversibility, and
   each of the plurality of pieces of authentication information has irreversibility.
[Addendum 15]
   A settlement method performed by a settlement server, including:
   transmitting key information to a user terminal used by a user;
   receiving from a shop terminal a settlement request containing authentication information generated based on the key information and predetermined time information, and a user identifier of the user;
   generating a plurality of pieces of authentication information based on the key information and a plurality of different pieces of time information; and
   performing settlement processing for the user using a verification result of the plurality of pieces of authentication information and authentication information received from the shop terminal.
[Addendum 16]
   A program that makes a computer execute the steps of:
   transmitting key information to a user terminal used by a user;
   receiving from a shop terminal a settlement request containing authentication information generated based on the key information and predetermined time information, and a user identifier of the user;
   generating a plurality of pieces of authentication information based on the key information and a plurality of different pieces of time information; and
   performing settlement processing for the user using a verification result of the plurality of pieces of authentication information and authentication information received from the shop terminal.
[Addendum 17]
   A program that makes a computer execute the steps of:
   receiving key information from a settlement server;
   generating authentication information based on the key information and time information; and
   when the computer is in an offline state, displaying a barcode having the authentication information, a user identifier, and identification information indicating that the computer is in an offline state embedded therein.

### Reference Signs List

1... Settlement system, 10... Settlement server, 11... Processor, 12... Storage device, 13... Communication IF, 14... Input device, 15... Output device, 20... Shop terminal, 30... User terminal, 100... Storage unit, 100a...Key management DB, 100b...Settlement DB, 101... Transmission unit, 102... Reception unit, 103... Generation unit, 104... Settlement processing unit, 200... Storage unit, 200a... Shop ID information, 201... Transmission unit, 202... Reception unit, 203... Reading unit, 204... Display control unit, 300... Storage unit, 300a... Key information, 300b... User ID information, 301... Transmission unit, 302... Reception unit, 303... Generation unit, 304... Display control unit

## Claims

1. A settlement server comprising: a transmission unit that transmits key information to a user terminal used by a user;
a reception unit that receives from a shop terminal a settlement request containing authentication information generated based on the key information and predetermined time information, and a user identifier of the user;
a generation unit that generates a plurality of pieces of authentication information based on the key information and a plurality of different pieces of time information; and
a settlement processing unit that performs settlement processing for the user using a verification result of the plurality of pieces of authentication information and authentication information received from the shop terminal.

2. The settlement server according to claim 1, wherein the reception unit receives, from the shop terminal, the settlement request containing a multi-digit character string indicating the authentication information and the user identifier, the multi-digit character string being received by the shop terminal from the user terminal in an offline state.

3. The settlement server according to claim 1 or 2, wherein, after the settlement processing is performed, the transmission unit transmits a result of the settlement processing to the user terminal in response to detection of an online state of the user terminal.

4. The settlement server according to any one of claims 1 to 3, wherein the reception unit receives, from each of a plurality of shop terminals, a settlement request containing authentication information generated based on the key information and predetermined time information, and a user identifier of the user, and
the authentication information that the reception unit receives from each of the plurality of shop terminals is generated based on the same key information.

5. The settlement server according to any one of claims 1 to 4, wherein the reception unit receives, from the shop terminal, the settlement request containing a multi-digit character string indicating the authentication information and the user identifier, and
the multi-digit character string is read from a barcode displayed on a screen of the user terminal at the shop terminal.

6. The settlement server according to claim 5, wherein the barcode has identification information embedded therein, the identification information indicating that the user terminal is in an offline state, and
the reception unit receives, from the shop terminal, the settlement request containing the multi-digit character string indicating the authentication information, the user identifier, and the identification information.

7. The settlement server according to any one of claims 1 to 6, wherein the settlement request includes a settlement amount, and
when the settlement amount exceeds an upper-limit settlement amount for the user, the settlement processing unit does not perform the settlement processing.

8. The settlement server according to any one of claims 1 to 7, wherein the settlement request includes a settlement amount, and
the longer the time between when the key information is sent to the user terminal and when the settlement request is received, the lower the settlement upper-limit amount for the user set by the settlement processing unit.

9. The settlement server according to any one of claims 1 to 8, wherein the settlement processing unit changes the upper-limit settlement amount for the user based on a fraud risk degree of the settlement request received from the shop terminal.

10. The settlement server according to claim 9, wherein the settlement processing unit evaluates the fraud risk degree based on the date and time when the settlement request is received from the shop terminal and location information of the shop terminal.

11. The settlement server according to any one of claims 1 to 10, wherein the generation unit calculates the plurality of different pieces of time information that are a predetermined number of pieces of past time information at predetermined time intervals from reception time of the settlement request, and generates the plurality of pieces of authentication information based on time information corresponding to the reception time and the predetermined number of pieces of past time information.

12. The settlement server according to claim 11, wherein the generation unit further calculates the plurality of different pieces of time information that are a predetermined number of pieces of future time information at predetermined time intervals from the reception time, and generates the plurality of pieces of authentication information based on time information corresponding to the reception time, the predetermined number of pieces of past time information, and the predetermined number of pieces of future time information.

13. The settlement server according to any one of claims 1 to 12, wherein when authentication information received from the shop terminal is included in the plurality of pieces of authentication information, the settlement processing unit performs the settlement processing.

14. The settlement server according to any one of claims 1 to 13, wherein the authentication information has irreversibility, and
each of the plurality of pieces of authentication information has irreversibility.

15. A settlement method performed by a settlement server, comprising:
transmitting key information to a user terminal used by a user;
receiving from a shop terminal a settlement request containing authentication information generated based on the key information and predetermined time information, and a user identifier of the user;
generating a plurality of pieces of authentication information based on the key information and a plurality of different pieces of time information; and
performing settlement processing for the user using a verification result of the plurality of pieces of authentication information and authentication information received from the shop terminal.

16. A program that makes a computer execute the steps of:
transmitting key information to a user terminal used by a user;
receiving from a shop terminal a settlement request containing authentication information generated based on the key information and predetermined time information, and a user identifier of the user;
generating a plurality of pieces of authentication information based on the key information and a plurality of different pieces of time information; and
performing settlement processing for the user using a verification result of the plurality of pieces of authentication information and authentication information received from the shop terminal.

17. A program that makes a computer execute the steps of:
receiving key information from a settlement server;
generating authentication information based on the key information and time information; and
when the computer is in an offline state, displaying a barcode having the authentication information, a user identifier, and identification information indicating that the computer is in an offline state embedded therein.
